Europäisches Patentamt

European Patent Office

Office européen des brevets

(11) Publication number: **0 450 509 A1**

# EUROPEAN PATENT APPLICATION

(21) Application number: 91104967.4

(22) Date of filing: 28.03.91

(51) Int. Cl.5: **F02B 29/00**, F02B 25/04, F02B 41/00

(30) Priority: 03.04.90 IT 1992090

(43) Date of publication of application:
09.10.91 Bulletin 91/41

(84) Designated Contracting States:
AT CH DE ES FR GB IT LI NL SE

(71) Applicant: **Bossu' Gianfranco**
**Via Gattamelata, 38**
**I-20149 Milan(IT)**

(72) Inventor: **Bossu' Gianfranco**
**Via Gattamelata, 38**
**I-20149 Milan(IT)**

(74) Representative: **Gervasi, Gemma et al**
**NOTARBARTOLO & GERVASI Srl Viale**
**Bianca Maria 33**
**I-20122 Milan(IT)**

(54) Internal combustion engine with at least an exhaust port in the cylinder.

(57) Multivalve high performance internal combustion engine with at least one cylinder, (11) intake and exhaust ducts (15;12) in the head regulated by respective valves (16;13) and in which said cylinder (11) has at least one exhaust port (21) regulated by valve means (23) timed with said valves (16;13) with a predetermined operating plan, or pattern.

FIG. 1

EP 0 450 509 A1

The present invention relates to a multivalve high performance internal combustion engine either four-stroke or two-stroke.

The use is known in high performance four-stroke internal combustion engines of feed and exhaust systems made in the cylinder head with an ever larger number of ducts regulated by their respective valves, with the purpose of obtaining good cylinder filling and rapid scavenging of burnt gases therefrom.

In two-stroke engines the use is known of a plurality of exhaust and transfer ports in the wall of said cylinder to obtain in this case also efficient filling and rapid scavenging of the burnt gases from said cylinder.

It is clear that the surface area of the combustion chamber crown in which are placed the intake and exhaust valve seats in the four-stroke engine is limited and hence the choice of several valves with a more or less small cross-section involve same problems. In the two-stroke engine also it is not possible to have broad surfaces on the cylinder wall to make many exhaust and transfer ports.

In addition, due to purely geometric problems, a larger number of valves compromises the possibility of obtaining high compression ratios because of the large volume of the combustion chamber and the higher number of cavities in the piston head to provide the predetermined valve lift.

The purpose of the present invention is to improve the efficiency and performance of said engines whether four- or two-stroke by increasing the cross section areas for passage of intake air and the compression ratio.

The object of the present invention is a multivalve high performance internal combustion engine equipped with at least one cylinder and at least two intake ducts per cylinder in the head and regulated by respective intake valves and characterized in that it has at least one exhaust port per cylinder made in said cylinder, said exhaust port being regulated by valve means whose opening and closing are timed with the opening and closing of the aforementioned valves in accordance with a predetermined plan, or pattern, of operation.

With multivalve four-stroke engines said engine has at least one exhaust duct per cylinder in the head and regulated by a respective exhaust valve and is characterized in that it is equipped with at least one exhaust port per cylinder made in said cylinder and regulated by valve means whose opening and closing are timed with the opening and closing of said valve in accordance with a predetermined plan, or pattern, of operation.

Direct injection multivalve two-stroke engines have at least one cylinder and one air pump for scavenging and supply of air in the combustion chamber through at least one duct in the head and regulated by a respective valve and are characterized in that they have at least one exhaust port per cylinder made in said cylinder, said exhaust port being regulated by valve means whose opening and closing are timed with the opening and closing of said valve in accordance with a predetermined plan, or pattern, of operation.

An important advantage of the present invention is the reduction in the four-stroke engine or elimination in the two-stroke engine of the number of exhaust valves located in the combustion chamber of said engine.

With reduction or elimination of the exhaust valves from the combustion chamber crown, the surface thereof is usable for mounting other intake valves which, arranged in opposing positions, create crossed flows and generate turbulences which improve combustion of the charge.

In the two-stroke engine version with direct injection the valve or valves are connected to an intake air pump which ensures maximal filling of the cylinder and optimal unidirectional scavenging of the cylinder.

Another advantage of the invention is the possibility of standardizing the architecture of the block for four-stroke and two-stroke engines with considerable economies in design, experimentation and production costs.

The characteristics and advantages of the present invention will now be described with reference to the annexed figures from 1 to 19 wherein are shown by way of nonlimiting examples some preferred embodiments of said invention.

FIG. 1 is a schematic cross section view of an internal combustion engine of the four-stroke type in which is shown the exhaust port in the cylinder.

FIG. 2 is a schematic cross section view of the engine of FIG. 1 in which the exhaust ducts are connected together.

FIGS. 3, 4, 5 and 6 are schematic cross sections showing the cylinder head of the four-stroke engine with some possible arrangements of the intake and exhaust valves with their associated ducts.

FIGS. 7 and 8 are schematic cross sections of a two-stroke internal combustion engine with direct fuel injection and an air pump for scavenging and supply.

FIGS. 9 to 19 show schematic drawings of control devices for the valve means which regulate the exhaust port in the cylinder. In FIGS. 1 and 2 reference number 10 indicates the cylinder head of a four-stroke engine, 11 indicates the cylinder, 12 the exhaust duct in the head 10, 13 indicates the associated exhaust valve with the valve seat 14, 15 indicates the intake duct and 16 and 17 the respective valve and valve seat. In the cylinder 11, 18 indicates the piston, 19 the piston rod and 20 the cavities for the cooling liquid of the cylinder 11.

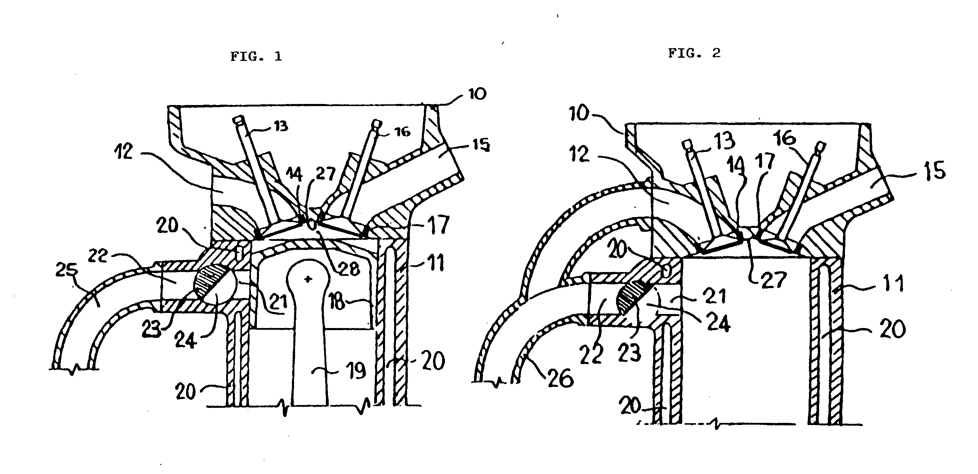

The number 21 indicates the exhaust port in the cylinder 11 and 22 the exhaust duct wherein is arranged a rotating valve 23 provided with a cavity or passage 24 appropriately timed with the valves 13 and 16 in accordance with a predetermined plan, or pattern, of operation. The number 25 indicates the exhaust manifold of the duct 22 of FIG. 1 while in FIG. 2 reference number 26 indicates the exhaust manifold connecting the duct 12 of the head 10 to the duct 22 of the cylinder 11. Reference number 27 indicates the crown of the combustion chamber 28.

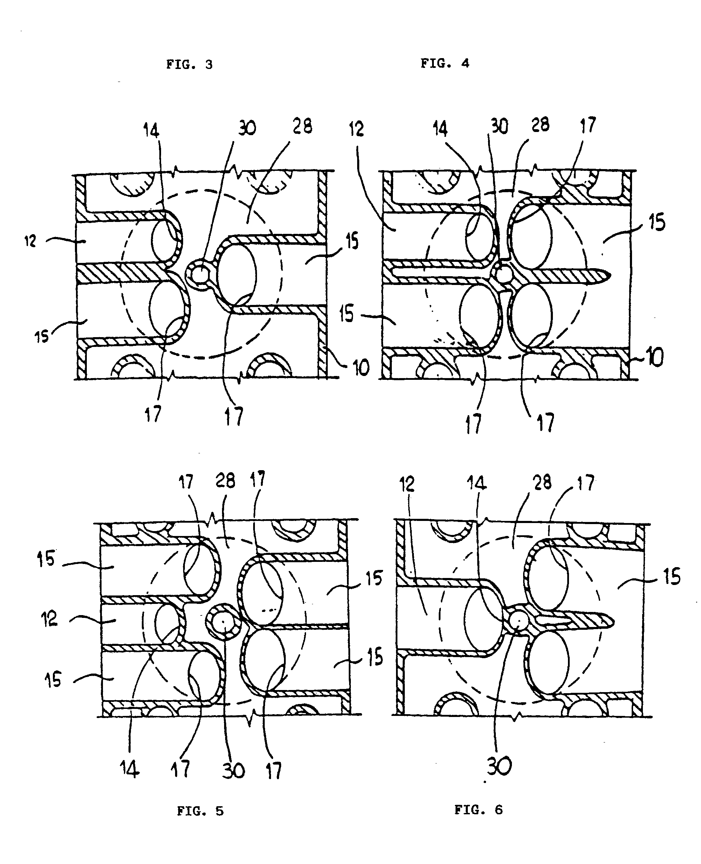

FIGS. 3, 4, 5 and 6 are examples of possible preferred arrangements of the exhaust valves and ducts 12 and intake valves and ducts 15 in the head 10, the same numbers as in FIGS. 1 and 2 indicate the common parts, while 30 indicates the seat of the sparking plug (not shown) and the combustion chamber 28 is shown with broken lines.

The engine shown in FIGS. 1-6 operates in accordance with the Otto four-stroke cycle, completing the usual stokes of charge intake, compression, ignition and combustion, expansion and exhaust of burnt gases.

Charge intake takes place through the valves 16 while burnt gases are exhausted through the port 21, which is uncovered by the rotating valve 23, and through the valve 13.

The exhaust valves 23 and 13 are appropriately timed together so as to be controlled to open simultaneously or one before the other, e.g. the valve 23 before the valve 13, so that in the final part of the exhaust phase only the valve 13 remains open while the exhaust port 21 is closed by the valve 23 and intercepted by the piston 18. The intake valves 16 are appropriately timed with the exhaust valves 13 and 23 so as to begin to open when the valve 13 is still open and to be completely open at the beginning of the intake stroke of the piston 18.

The multivalve engine in accordance with the invention has combustion chambers 28 in the crown 27 of which are mounted two intake valves 16 and one exhaust valve 13 as shown in FIGS. 3 and 6 or three intake valves 16 and one exhaust valve 13 as shown in FIG. 4 or four intake valves 16 and one exhaust valve 3 as shown in FIG. 5. The intake ducts 15 can be single, as shown in FIGS. 3 and 5, or paired as in FIGS. 4 and 6. In the engine in accordance with the invention each cylinder has another exhaust port 21 in the cylinder 11, regulated by a rotating valve 23 as shown in FIGS. 1 and 2. The cross section area of the exhaust port 21 combines with the one uncovered by the exhaust valve 13 in the exhaust duct 12 of the head 10 to exhaust the burnt gases from the engine.

With this solution, as it is possible to reduce the total cross section area of the passage and also the number of exhaust valves in the combustion chamber crown, the cross section area of said crown can be used to increase the overall passage cross section and also the number of intake valves, contributing to better filling and more efficient combustion of the engine.

Filling of the engine is also helped by the supplemental chamber consisting of the portion of duct 22 between the port 21 and the rotating valve 23 due to the lesser pressure in the cylinder and the resulting greater air flow through the intake valves.

Reduction of the overall number of valves in the crown 27 results in an increase in the compression ratio of the engine because the number and consequently the volume of the cavities necessary in the piston head 18 to achieve the correct lift of said valves and this helps to improve the efficiency of the engine.

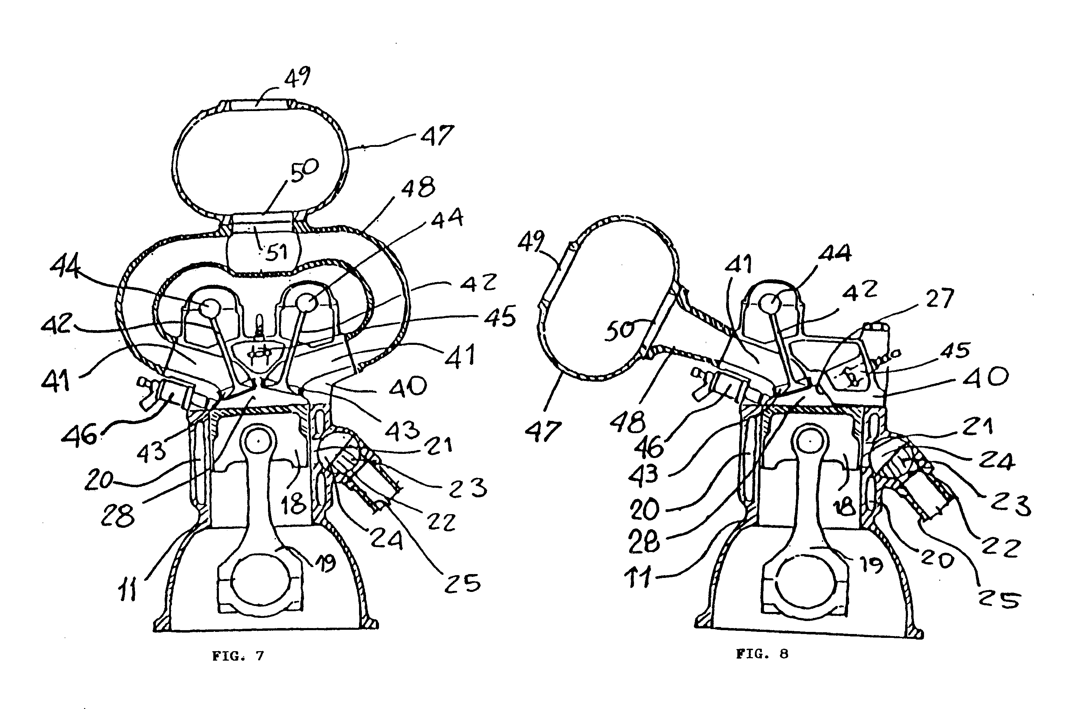

FIGS. 7 and 8 show schematically and in cross section a two-stroke internal combustion engine while the same numbers as in FIGS. 1 and 2 indicate common details and 40 indicates the head in which are made the intake ducts 41 regulated by the valves 42 with their respective valve seats 43. Number 44 indicates the camshaft and 45 the sparking plug, 46 indicates the fuel injector which injects directly into the cylinder 11 and the combustion chamber 28. Number 47 indicates generally an air pump connected to the intake manifold 48, 49 the opening for atmospheric air intake and 50 and 51 indicate the air passage between the air pump 47 and the intake manifold 48. The two-stroke engine shown in FIGS. 7 and 8 carries out the usual Otto cycle with direct injection, drawing air under pressure from the ducts 41 through the valves 42 and expelling the burnt gases through the exhaust port 21 which is uncovered by the rotating valve 23 in the exhaust stroke. For this purpose the rotating valve 23 is appropriately timed with the intake valve 42 so as to optimize exhaust and scavenging, really improving filling of the engine, also for the possibility of providing exhaust timings assymetrical with piston movement.

The operating cycle of the internal combustion engine which is the object of the present invention is, as mentioned, the known four-stroke in one case and two-stroke with intake valve 42 in the second case.

The rotating valve 23 can also be the sliding or mushroom type and regulates opening and closing of the port 21 in the cylinder 11 in a manner synchronized with opening and closing of the valves 42, or 13 and 16 arranged in the head 10 or 40.

The position of the exhaust ports 21 along the generating line of the cylinders can be different from the one shown, e.g. closer to bottom dead centre of the piston.

As shown in the above description, it is possible to standardize the architecture of the block for four-stroke and two-stroke engines with reduction of design, testing and production costs.

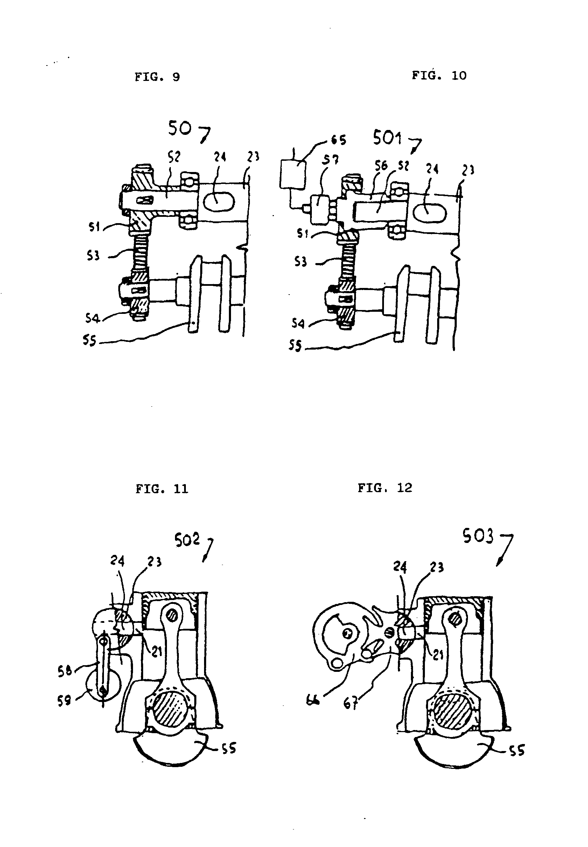

In FIG. 9, reference number 50 indicates as a whole a control device for the rotating valve 23 equipped with as many cavities or passages 24 as there are cylinders in the engine. The device 50 includes a toothed pulley 51 keyed on the shaft 52 integral with said rotating valve, a toothed belt 53 and toothed pulley 54 keyed on the crankshaft 55 of the engine shown in FIGS. 1-8 with the pulleys 51 and 54 appropriately timed.

Motion transmission from the crankshaft 55 and the shaft 52 of the rotating valve 23 can be achieved as an alternative by means of a chain or gears.

The reduction ration is selected on the basis of the type of operation desired for the rotating valve 23, e.g. it can be 1/2 or 1/4 for a four-stroke engine or 1 and 1/2 for a two-stroke engine. The rotating valve 23 is appropriately timed with the valves 13 and 16 in accordance with a predetermined plan or pattern of operation so as to open simultaneously with or in advance of the valves 13 and so that the valves 16 begin to open when the valve 13 is still open. Timing between the rotating valve 23 and the valve 42 can also be selected so that the latter begins to open when the rotating valve 23 is still open.

FIG. 10 shows a variant of the device 50 of FIG. 9. The control device is indicated as a whole by 501 and comprises also a timing regulating device 56 which is operationally connected to the shaft 52 and the pulley 51 and is piloted by an electromagnetic actuator 57 of the on/off or proportional type, controlled by the control unit represented schematically by the block 65. The timing regulating device 56 permits regulation of the timing of the shaft 52 with the shaft 55 depending on the predetermined engine parameters, e.g. speed.

For example, at idling and low engine speeds, opening of the rotating valve can be retarded while at high speeds it can be advanced.

FIG. 11 shows schematically a valve 23 having through cavitys or passages 24 and driven to oscillate from a position in which it closes the exhaust port 21 to a position in which it opens said exhaust port, by means of a device 502 consisting of a rod 58 and a crank 59 entrained by the crankshaft 55 with predetermined transmission and timing ratio.

In FIG. 12, 503 indicates as a whole a control device for the rotating valve 23 which is appropriately timed with the valves 13 and 16 and comprises a Malta cross mechanism operationally connected to the shaft 52 of the rotating valve 23 and to the crankshaft 66 which is driven with a suitable transmission ratio by the drive shaft 55.

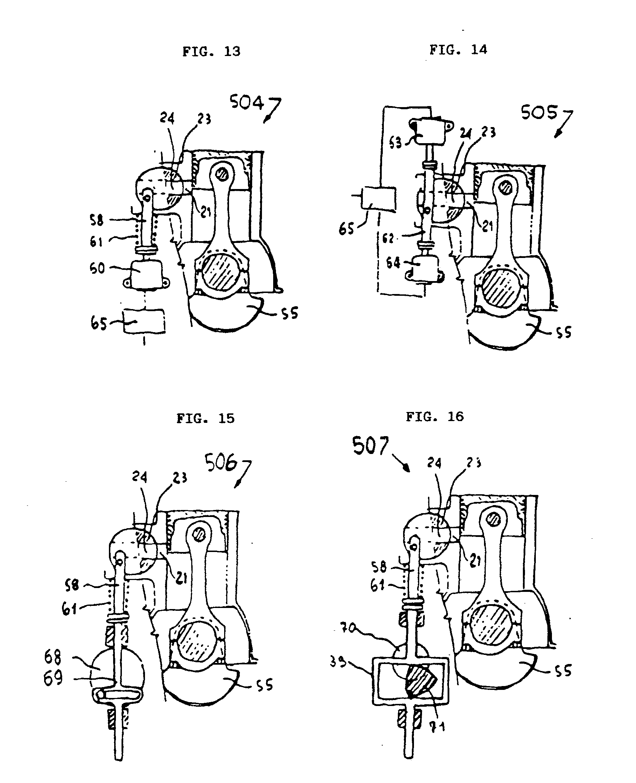

In the variant of FIG. 13 the valve 23 is driven to oscillate by a device 504 consisting of a rod 58 driven by the coil of an electromagnetic actuator 60 of the on/off or proportional type against the action of the spring 61, while in the variant of FIG. 14 it is driven to oscillate by a device 505 consisting of the rod 62 which is driven by two electromagnetic actuators 64 and 64 which are also of the on/off or proportional type and capable of pulling or pushing said rod. The electromagnetic actuators 60, 63, 64 are operationally connected to a control unit represented schematically by the block 65.

In the variant of FIG. 15 the valve 23 is driven to oscillate by a control device 506 consisting of a rod 58 and a frame 69 driven against the action of the spring 61 by a crank 68 operationally connected to the drive shaft 55 with a predetermined transmission and timing ratio.

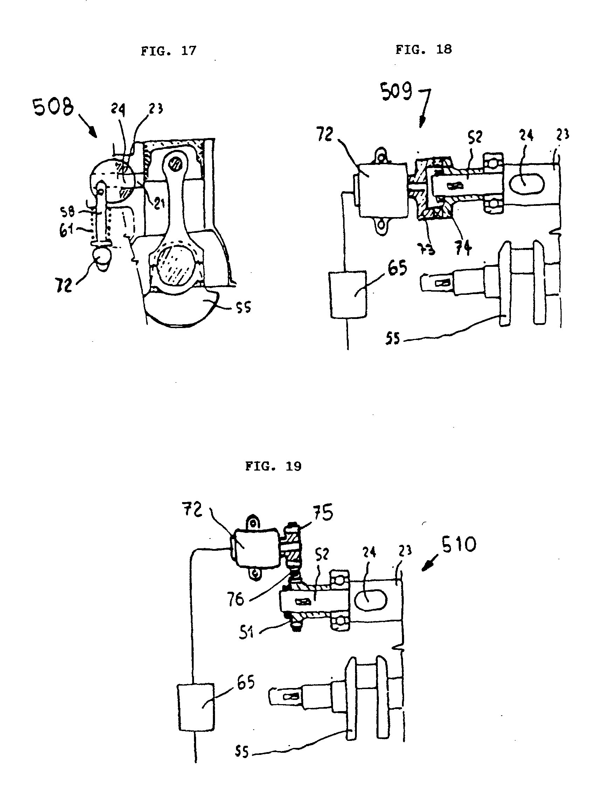

In the variant of FIG. 16 the valve 23 is driven to oscillate by a control device 507 consisting of a rod 58 and a frame 69 driven against the action of the spring 61 by a triangular eccentric 71 operationally connected to the drive shaft 55 with predetermined transmission and timing ratio.

In FIG. 17 reference number 508 indicates overall a control device for the rotating valve 23 comprising a rod 58 driven against the action of the spring 61 by a camshaft or eccentrics 72 operated by the drive shaft 55 with predetermined transmission and timing ratio. In FIG. 18 reference number 509 indicates overall a control device for the rotating valve 23 consisting of an angular electromagnetic actuator 72 which controls the shaft 52 of said valve through the frontal disks 73 and 74 and is operationally connected to the electronic control unit 65 to control opening and closing of the valve 23 in a manner timed with the opening and closing of said valves 16, 42 in accordance with a predetermined plan, or pattern, of operation.

In FIG. 19 reference number 510 indicates overall a control device which constitutes a variant of the one in FIG. 18 in which the angular electromagnetic actuator 72 is operationally connected to the shaft 52 through a pulley 75, a toothed belt 76 and a pulley 51 and to a control unit represented schematically by the block 65. As an alternative the shaft 52 can be driven by a chain or gear.

**Claims**

1. Multivalve high performance internal combustion engine having at least one cylinder (11) and at least two intake ducts (15; 41) per cylinder in the head (10, 40) and regulated by respective intake valves (16; 42) and characterized in that it has at least one exhaust port (21) per cylinder in said cylinder (11), said exhaust port (21) being regulated by valve means (23) whose opening and closing is timed with the opening and closing of said valves (16; 42) in accordance with a predetermined plan, or pattern, of operation.

2. Engine in accordance with claim 1 of the four-stroke type having at least one exhaust duct (12) per cylinder in the head (10) and regulated by a respective exhaust valve (13) and characterized in that it has at least one exhaust port (21) per cylinder in said cylinder and regulated by valve means (23) whose opening and closing is timed with the opening and closing of said valve (13) in accordance with a predetermined plan, or pattern, of operation.

3. Four-stroke multivalve high performance internal combustion engine in accordance with claim 2 having a cylinder head (10) in which are made at least two intake ducts (15) separated or paired and at least one exhaust duct (12) regulated by respective valves (13) (16) which control intake and exhaust of the charge in the combustion chamber (28) and characterized in that in the cylinder (11) is made at least one exhaust port (21), said exhaust port (21) being regulated by valve means (23) whose opening and closing is timed with the opening and closing of said valves (13) (16) in accordance with a predetermined plan, or pattern, of operation.

4. Engine in accordance with claim 1 of the two-stroke type with direct injection having at least one cylinder (11) and one air pump (47) for scavenging and supply of air in the combustion chamber (28) through said at least two ducts (41) separated or paired and made in the head (40) and regulated by respective valves (42) and characterized in that it has at least one exhaust port (21) per cylinder in said cylinder (11), said exhaust port (21) being regulated by valve means (23) whose opening and closing are timed with the opening and closing of said valves (42) in accordance with a predetermined plan, or pattern, of operation.

5. Engine in accordance with claim 1, characterized in that said valve means (23) for regulation of the exhaust port (21) are arranged in an exhaust duct (22) in the cylinder (11) and consist of at least a rotating or oscillating valve.

6. Engine in accordance with claim 1, characterized in that in each cylinder (11) are made at least one exhaust port (21) and at least one exhaust duct (22), each exhaust port (21) being regulated by respective valve means (23) consisting of a rotating valve or an oscillating valve arranged in said exhaust duct (22).

7. Engine in accordance with claims 5 and 6, characterized in that said valve means (23) consist of a rotating valve or an oscillating valve provided with at least one cavity or passage (24).

8. Engine in accordance with claim 1, characterized in that said valve means (23) consist of at least a mushroom valve.

9. Engine in accordance with claim 1, characterized in that said valve means (23) consist of at least a sliding valve.

10. Engine in accordance with claims 2 and 5, characterized in that the exhaust duct (12) in the head (10) and the exhaust duct (22) in the cylinder (11) are both connected to a single exhaust manifold (26).

11. Two-stroke internal combustion engine with direct injection having at least one cylinder (11) and an air pump (47) for scavenging and supply of air in the combustion chamber (28) through at least one duct (41) in the head (40) and regulated by a respective valve (42) and characterized in that it has at least one exhaust port (21) per cylinder in said cylinder (11), said exhaust port (21) being regulated by valve means (23) whose opening and closing are timed with the opening and closing of said valve (42) in accordance with a predetermined plan, or pattern, of operation.

12. Engine in accordance with claim 11, characterized in that said valve means (23) for regulation of the exhaust port (21) are arranged in an exhaust duct (22) made in the cylinder (11) and consist of at least a rotating or oscillating valve.

13. Engine in accordance with claim 11, characterized in that said valve means (23) consist of at least a mushroom valve.

14. Engine in accordance with claim 11, characterized in that said valve means (23) consist of at least a sliding valve.

15. Engine in accordance with claim 11, characterized in that in each cylinder (11) there is at least one exhaust port (21) regulated by respective valve means (23) consisting of a rotating or oscillating valve arranged in said exhaust duct (22).

16. Engine in accordance with claim 1, characterized in that it comprises a control device (50; 501-510) operationally connected to said valve means (23) to control their opening and closing in a manner timed with the opening and closing of said valves (16; 42) in accordance with a predetermined, plan, or pattern, of operation.

17. Engine in accordance with claims 5, 6, 16, characterized in that it comprises a control device (50) for said rotating valve (23) consisting of a toothed pulley (51) integral with said rotating valve, a toothed belt (53) and a toothed pulley (54) integral with the crankshaft (55) of said engine, said pulleys (51, 54) being mounted with predetermined timing.

18. Engine in accordance with claims 5, 6, 16, characterized in that it comprises a control device (501) for said rotating valve (23) consisting of a timing regulating device (56) operationally connected to said rotating valve and to a toothed pulley (51), driven in rotation, by means of a toothed belt (53), a toothed pulley (54) integral with the crankshaft (55) of said engine, said timing regulating device (56) being piloted by an electromagnetic actuator (57) of the on/off or proportional type and operationally connected to a control unit (65) capable of controlling the opening and closing of said valve (23) in a manner timed with the opening and closing of said valve (16; 42) in accordance with a predetermined plan, or pattern, of operation.

19. Engine in accordance with claims 5, 6, 16, characterized in that it comprises a control device (502) for said oscillating valve (23) consisting of a rod (58) operationally connected to said oscillating valve, and crank (59) in turn operationally connected to the crankshaft (55) with predetermined transmission and timing ratio.

20. Engine in accordance with claims 5, 6, 16, characterized in that it comprises a control device (503) for said oscillating valve (23) consisting of a Malta cross mechanism (67) driven by a crank shaft (66) in turn operationally connected to the crankshaft (55) with predetermined transmission and timing ratio.

21. Engine in accordance with claims 5, 6, 16, characterized in that it comprises a control device (504) for said oscillating valve (23) consisting of a rod (58) operationally connected to said oscillating valve driven by an electromagnetic actuator (60) against the action of a spring (61), said electromagnetic actuator, of the on/off or proportional type, being in turn operationally connected to a control unit (65) capable of controlling the opening and closing of said valve (23) in a manner timed with the opening and closing of said valves (16, 42) in accordance with a predetermined plan, or pattern, of operation.

22. Engine in accordance with claims 5, 6, 16, characterized in that it comprises a control device (505) for said oscillating valve (23) consisting of a rod (62) operationally connected to said valve driven by two electromagnetic actuators (63,64), said electromagnetic actuators, of the on/off or proportional type, being in turn operationally connected to a control unit (65) capable of controlling the opening and closing of said valve (23) in a manner timed with the opening and closing of said valves (16, 42) in accordance with a predetermined operating plan, or pattern.

23. Engine in accordance with claims 5, 6, 16, characterized in that it comprises a control device (506) for said oscillating valve (23) consisting of a rod (58) operationally connected to said oscillating valve and a frame (69) driven against the action of a spring (61), a crank (68) in turn operationally connected to the crankshaft (55) with predetermined transmission and timing ratio.

24. Engine in accordance with claims 5, 6, 16, characterized in that it comprises a control device (507) for said oscillating valve (23) consisting of a rod (58) operationally connected to said oscillating valve and a frame (69) driven against the action of a spring (61), a triangular eccentric (71) in turn operationally connected to the crankshaft (55) with predetermined transmission and timing ratio.

25. Engine in accordance with claims 5, 6, 16, characterized in that it comprises a control device (508) for said oscillating valve (23) consisting of a rod (58) operationally connected to said oscillating valve and driven against the action of a spring (61) by a cam or eccentric (72) in turn operationally connected to the crankshaft (55) with predetermined transmission and timing ratio.

26. Engine in accordance with claims 5, 6, 16, characterized in that it comprises a control device (509) for said oscillating valve (23) consisting of an angular electromagnetic actuator (72) which drives said valve by means of frontal discs (73, 74) and is operationally connected to an electronic control unit (65) capable of controlling the opening and closing of the valve (23) in a manner timed with the opening and closing of said valves (16: 42) with predetermined operating plan or pattern.

27. Engine in accordance with claims 5, 6, 16, characterized in that it comprises a control device (510) for said oscillating valve (23) consisting of an angular electromagnetic actuator (72) which drives said valve by means of toothed pulleys (51, 57) and a toothed belt (76) and is operationally connected to an electronic control unit (65) capable of controlling the opening and closing of the valve (23) in a manner timed with the opening and closing of said valves (16; 42) with predetermined operating plan, or pattern.

FIG. 1

FIG. 2

EP 0 450 509 A1

FIG. 3

FIG. 4

FIG. 5

FIG. 6

FIG. 8

FIG. 7

FIG. 9

FIG. 10

FIG. 11

FIG. 12

FIG. 13

FIG. 14

FIG. 15

FIG. 16

FIG. 17

508  24  23
58
61
72
21
55

FIG. 18

509
72  52  24  23
73  74
65
55

FIG. 19

72  75
76  52  24  23  510
51
65
55

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-1 179 369 (CHENARD ET WALCKER) <br> * page 1, column 2, line 9 - page 3, column 1, line 49; figures * | 1,2,3,5,6, 7,10,16 | F 02 B 29/00 <br> F 02 B 25/04 <br> F 02 B 41/00 |
| Y | GB-A-2 076 465 (EHRLICH) <br> * page 1, line 70 - page 2, line 33; figures * | 1,2,3,5,6, 7,10,16 | |
| A | US-A-2 119 464 (LITZLER) <br> * column 2, line 34 - column 4, line 68; figures * | 1,2,3,5,6, 7,16 | |
| A | US-A-4 098 237 (SUQUET) <br> * column 2, line 60 - column 4, line 33; figures * | 1 | |
| A | FR-A-2 593 855 (BOLLEE) <br> * page 3, line 27 - page 3, line 36; figure 1 * | 8,13 | |

TECHNICAL FIELDS SEARCHED (Int. Cl.5)

F 02 B
F 01 L

The present search report has been drawn up for all claims

| Place of search | Date of completion of search | Examiner |
|---|---|---|
| The Hague | 20 June 91 | MOUTON J.M.M.P. |